# EUROPEAN PATENT SPECIFICATION

(11) **EP 0 666 826 B1**
(45) Date of publication and mention of the grant of the patent: **02.07.1997**
(21) Application number: 94902122.4
(22) Date of filing: 09.11.1993
(51) Int. Cl.: B65G 67/60, B66C 19/00, B65G 63/00, B66C 17/20

(54) **Method and device for loading and unloading of vessels**
Verfahren und Vorrichtung zum Be- und Entladen von Schiffen
Procédé et dispositif de chargement et de déchargement pour navires

(30) Priority: 09.11.1992 NL 9201958
(43) Date of publication of application: 16.08.1995
(73) Proprietor: AVECO INFRASTRUCTURE CONSULTANTS B.V., NL-3000 CR Rotterdam (NL); EUROPE COMBINED TERMINALS B.V., NL-3000 HK Rotterdam (NL); RAILBOUW B.V., NL-4143 HL Leerdam (NL)
(72) Inventor: OUDAKKER, Gerrit, NL-1721 DC Broek Op Langedijk (NL)
(74) Representative: de Bruijn, Leendert C.
(86) International application number: NL9300237
(87) International publication number: WO9411287

(56) References cited:
- DE-A- 1 803 946
- DE-A- 2 102 624
- DE-A- 2 555 316
- DE-C- 147 783
- DE-C- 189 300
- FR-A- 1 594 623
- US-A- 3 812 987
- PATENT ABSTRACTS OF JAPAN vol. 7, no. 244 (M-252)(1389) 28 October 1983 & JP,A,58 130 829 (HITACHI SOZEN) 4 August 1983

## Description

The invention relates to a method of loading and unloading a ship with containers, and to a portal crane structure.

for example It is known from US-A-3,812,987 to load and unload so-called container vessels by means of cranes which are movable along the quay parallel thereto over rails above the vessels, and which have a swing-down crane jib which in the swung-down position projects crosswise from the quay, by means of which jib a so-called traversing crab with container yoke can be moved above the vessel and the quay. Such cranes are of considerable height and great weight. During loading and unloading, regular warping of the crane is necessary, in order to make the traversing crab operate in an area further on in the lengthwise direction of the vessel. In JP-A-58-130829, a system is described to load casks on rails into the cargo bay of a ship. A portal crane comprising an overhead track is placed across a dock of the ship. A carriage can be displaced in the direction of the width of the ship along the overhead track.

From DE-A-189300 a portal crane is known comprising a fixed central hoisting element and a displaceable carriage which overlaps the working space of the fixed hoisting element.

The disadvantage of these known cranes is the need for moving the crane in its entirety during loading and unloading operations. The high crane weight and the large dimensions, and the fact that the crane moves along the quay where persons and other goods are also present, make this regular movement troublesome, time-consuming and hazardous, and therefore expensive. Furthermore, the capacity of such a crane is limited, which leads to the use of a number of such cranes for loading and unloading one vessel. This considerably increases the capital investment, while the cranes can impede each other, which requires great additional attention. Therefore, further increasing the loading and unloading capacity by employing an increasing number of known cranes travelling along the quay leads to less and less in the way of additional output, or even to a disproportionate rise in costs. The current trend towards increasing the dimensions of container vessels means that there is great interest in a solution to the above problems.

From DE-A-2102624, a method and a portal crane structure for loading and unloading a ship with containers according to the preambles of claims 1 and 2 are known. The loading area from which the containers are moved into the ship is located at the rear of the ship. From thereon, containers are moved on to the ship and off the ship by mans of conveyor belts. The portal cranes are located at the rear of the ship and extend across the conveyor belts. This system is relatively complex and needs additional hoisting elements placed on board of the ship itself for positioning each container in its appropriate vertical position.

The object of the invention is to provide a method and a crane structure of loading and unloading containers onto and from a ship said method/structure enabling the problems described above to be solved.

The technical solutions for said problem are characterised by the features indicated in the second parts of claims 1 and 2.

The invention is based on the idea of making the moving mass of the loading and unloading device as small as possible during the entire period of the loading or unloading of a vessel. This ensures that greater accelerations can be achieved, so that the containers can be moved more quickly into and out of the vessel. Furthermore, all movement occurs far above the quay, with the result that a good spatial separation is achieved between the moving parts of the device and other persons and goods on the quay. This considerably reduces operating hazards. In addition, with such a device it is possible to develop an efficient logistical control system, for the purpose of being able to handle as many containers as possible with the fewest possible hoisting means in the fewest possible movements.

It is preferable for the hoisting means to be able to operate in the boundary area of an adjoining hoisting means. This provides the possibility of effectively covering the entire hold of the vessel without the need for accurately positioning the vessel relative to the hoisting means.

The portal crane structure is supported on the quays on either side of said dock, which permits an efficient construction. This provides a gantry-type device into which a vessel can be sailed. It is then also possible to supply and discharge containers at both sides of the vessel, which further increases the capacity. In such an embodiment, but even where there is no dock and the device rests only on one quay, a container store can be provided next to the device, in which store containers - for example ten or more - can be accommodated at different levels. It is then also preferable to site a deposit platform above the quay in the area in which the hoisting means of the device are operating. Containers, either coming from the vessel during unloading or from the store during loading, can be deposited on said platform, which provides an efficient facility for reliable coordination of the loading and unloading device with the container store, each having its own logistics.

The invention is also based on the idea of striving to limit the loading and unloading times as much as possible. On the one hand, the use of the fixed gantry construction, possibly in conjunction with one or more docks, contributes to this. On the other hand, from that point of view a major contribution can be expected from correct setting up and equipment of the stores, and the supply and discharge between said stores and the loading and unloading device. In this connection, the setting up of the stores as close as possible to the mooring points for the vessels is advantageous. As regards docks, the stores are preferably set up in line with said docks and connecting directly to the end faces thereof. It is also preferable to divide the stores into a part for temporary storage and a part for long-term storage. Goods go into the temporary storage part, for example, when they are being transferred from one dock to the other, adjacent dock while the vessel to be loaded is not yet ready for loading. Other considerations for placing in temporary storage are on account of subsequent transportation by rail or road. Conversely, this also applies when the goods have been brought in by rail, for example, and the vessel is not yet ready for loading. For rapid handling, the temporary store is placed closest to the docks. The stores for long-term storage can be placed further away. In particular, if the positioning, viewed in succession in the lengthwise direction, is dock - temporary store - permanent store, the temporary store can also be used as a buffer. Prior to the loading of a vessel, goods from, for example, the permanent store or from another vessel, train or lorry can then be accommodated in the temporary store for rapid further handling, great account already having to be taken of the loading plan. Conversely, all goods can be accommodated quickly in the temporary store during unloading, so that the unloading operations can be carried out quickly, and the vessel is ready to sail again quickly. The goods can then be distributed further from the temporary store to, for example, the permanent store, train etc. In this connection, it is a further advantage if, viewed in the lengthwise direction, provision is made between the dock, the temporary store and the permanent store for transverse paths, along which the goods can be transported in the transverse direction bypassing the stores and the docks. It is also advantageous if the temporary store is divided into adjacent sectors in the lengthwise direction of the succesive arrangement of dock - temporary store - permanent store, which sectors are separated from one another by longitudinal tracks along which the goods can be taken directly from the dock to the permanent store, bypassing said sectors. The number of sectors is preferably equal to the number of docks. With the transverse paths and with the longitudinal tracks, efficient goods transport between the docks and the stores, and within various stores, is possible.

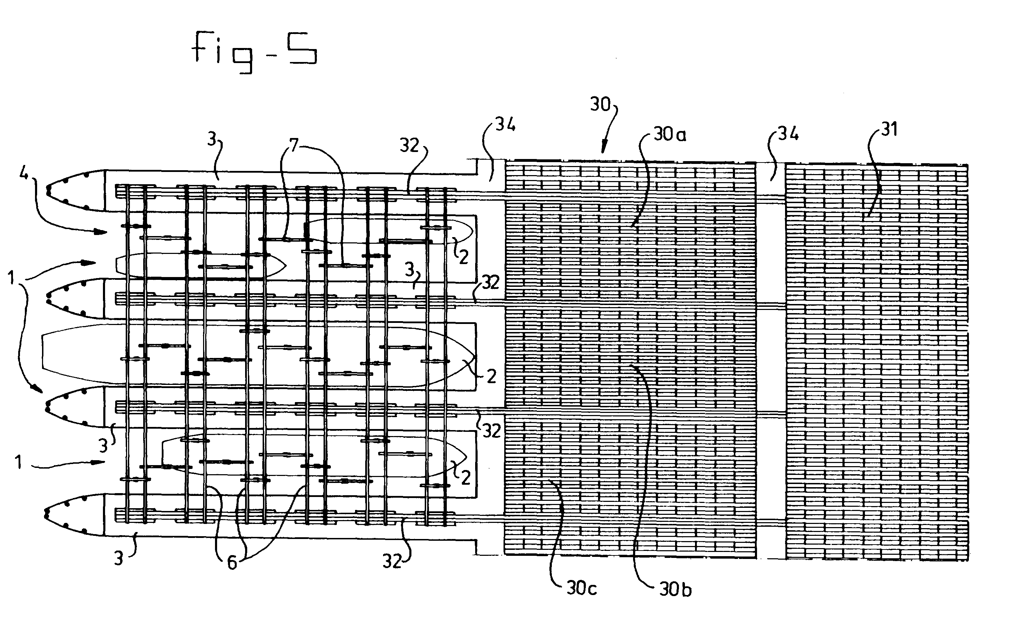

In conjunction with various parallel adjacent docks, the invention also makes it possible to provide an integrated gantry construction for all docks. Consequently, it is possible to pass above all docks with one hoisting element, as illustrated more particularly with reference to Fig. 5. Goods can then be transferred, hanging in the same hoisting element, directly from one vessel to a vessel in an adjacent dock. Of course, the same advantages can be achieved if the supporting tracks for hoisting elements which operate above one particular dock in each case are designed to be common tracks, and the operating ranges of said hoisting elements overlap, for example above the quays separating the parallel docks from each other. Goods from one vessel can then be deposited on the quay, or a special platform there, by the appropriate hoisting element, and can subsequently be picked up by the hoisting element of the adjacent dock, in order to load the vessel in question. Of course, it is also possible to have combinations, where the goods are placed from the vessel on a platform on the quay, those goods are then moved over said platform parallel to said quay and in the lengthwise direction of the moored vessels, and are subsequently picked up by a hoisting element operating with respect to a further, adjoining dock.

The invention will be explained in greater detail below on the basis of a number of examples of embodiments, with reference to the appended drawings, in which:
Fig. 1 shows diagrammatically in perspective a dock with moored container vessel, and a device according to the invention;
Fig. 2 shows in perspective a detail of Fig. 1;
Fig. 3 shows a view corresponding to Fig. 2 of an alternative;
Fig. 4 shows a front view of the dock with vessel of Fig. 1, with an alternative device according to the invention, with container stores; and
Fig. 5 shows diagrammatically in top view an alternative to Fig. 4, in which a plurality of docks is shown.

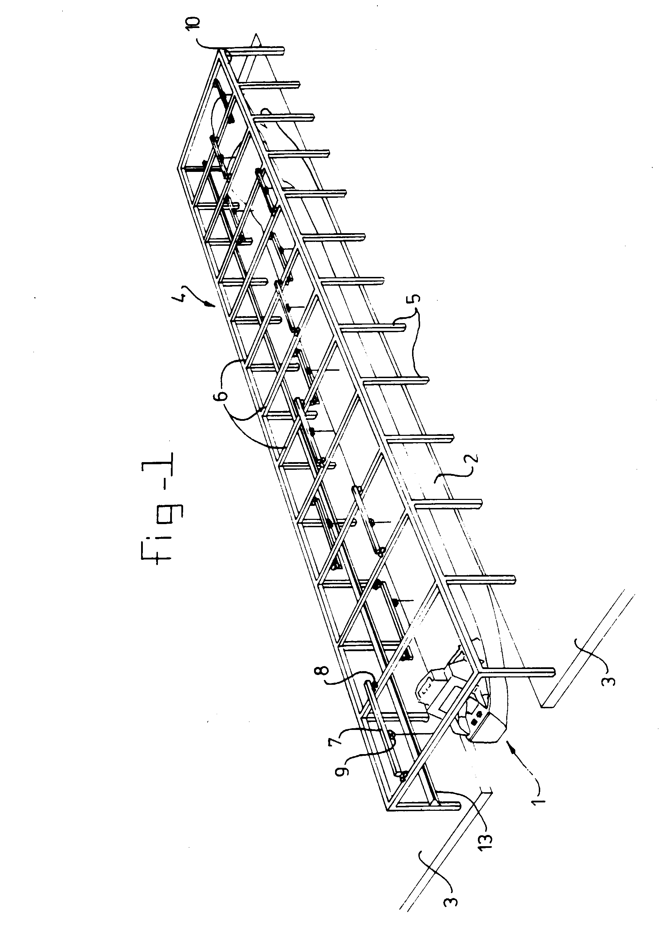

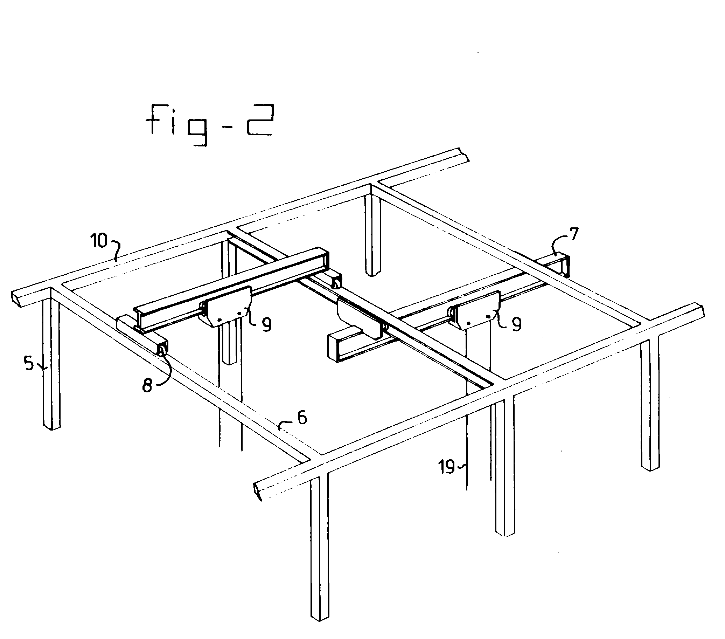

Fig. 1 shows diagrammatically a dock 1, into which a vessel 2 has been sailed. A quay 3 extends close to said vessel 2 along each side thereof. The device 4 according to the present invention extends above the dock, resting on each quay 3. As shown, the device 4 comprises a gantry-type framed construction, formed by vertical columns 5 resting on the quay, and above them transverse beams 6 which run parallel to each other, crosswise from the quay 3 and are connected by their ends to the top ends of the columns 5. Longitudinal beams 10 extend on both sides parallel to the quay 3 between the top ends of the columns 5, and interconnect said columns 5. In the embodiment according to Figs. 1 and 2, the beams 6 form guide tracks along which hoisting mans 7 are movable. As can be seen, a hoisting girder 7 is provided for every two adjacent beams 6, which girder is movable in the lengthwise direction of said beams 6. Each hoisting girder 7 runs at right angles to the beams 6 and is provided at the ends with supporting wheels or rollers 8, which can travel along the beams 6. Suspended from each hoisting girder 7 is a hoisting crab 9, which can be moved in the lengthwise direction of the girders 7. Each hoisting crab has conventional lifting means, such as hoisting cable 19, winch drums (not visible) and the like. As Fig. 2 shows in greater detail, the hoisting girders 7 extend alternately below and above the beams 6, the top hoisting girders 7 resting on the beams 6, and the bottom girders 7 being suspended from the beams 6. The bottom hoisting girders 7 project beyond the beams 6 from which they are suspended, with the result that the corresponding hoisting crab 9 can go under the end part of the adjacent hoisting girder 7. This provides an overlap of the operating ranges of the hoisting means of the device 4, by means of which it is possible, without warping the vessel, to reach all parts of the hold thereof with the device 4 for depositing or removing containers.

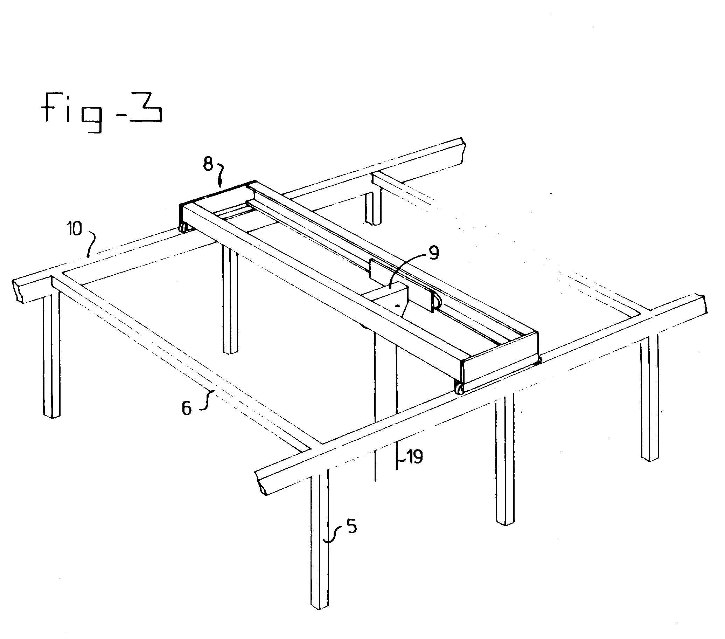

Fig. 3 shows an alternative for the support for the hoisting girders 7. The hoisting girders 7 are now supported by the beams 10 in a movable manner between two adjacent beams 6, which means that they can now travel in the lengthwise direction of the vessel 2. The hoisting crab 9 is now movable in the lengthwise direction of the beams 6. On account of the greater span of the girders 7, the moving mass here is higher than in the case of the variant according to Figs. 1 and 2, but the hoisting crab 9 now carries out most movements, while the hoisting girders 7 need be moved only when handling of the part of the hold covered by the hoisting crab 9 with the girder 7 stationary has been completed.

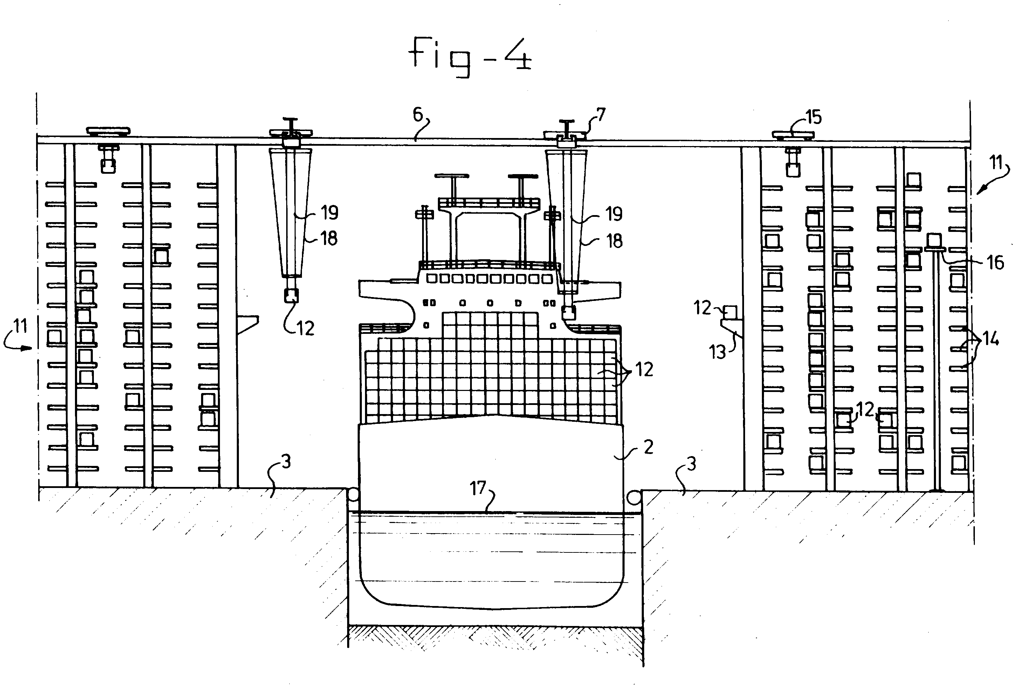

Finally, Fig. 4 shows an application of the invention in conjunction with container stores 11 which are disposed on either side of the device 4, and which are only partially shown here. In the situation shown, the vessel 4 is laden with standard 20-foot sea containers with a capacity of approximately 20 tonnes each. Two girders 7, which move along common beams 6, handle the lateral supply and discharge of the containers 12. Above the quay, a deposit platform 13 runs in each case at the inside of the columns 5 (see also Fig. 1, in which only one platform 13 is shown). This platform is accessible to the hoisting crabs 9 on the hoisting girders 7. Containers coming out of the vessel 2 or out of the store 11 are deposited on said platforms. Said platform 13 thus forms an interface between the device 4 and the stores 11. Each store has container racks 14 which are situated above one another and extend along virtually the entire device 4. Containers 12 can be placed in and removed from said racks 14 by various hoisting crabs 15 and raising platforms 16. Due to the fixed position of the racks 14 and the tracks along which the various hoisting means of both the device 4 and the stores 11 move, a loading and unloading installation according to the invention lends itself extremely well to fully automatic logistical control.

Since the beams 6 are situated at relatively great height above the water level 17, the hoisting crabs 9 have special auxiliary gear 18 for stabilizing the hoisting cables 19. A top yoke and a narrower bottom yoke, between which pulling cables run from the ends onwards, are used.

Fig. 5 also shows a variant, in which various parallel docks 3 are combined in the lengthwise direction thereof with in succession a temporary store 30 and a permanent store 31. Three docks 3 are shown, but a larger number is also possible, as is a smaller number. However, the best result with regard to efficiency of the loading and unloading and further handling of the goods is achieved with two or more parallel, adjoining docks 3. As shown, the beams 6 extend above all three docks 3, and in each case rest on columns 5 (not visible in Fig. 5, but can be seen in Fig. 1). As in the case of the above-described embodiments, hoisting girders 7 are movable along the beams 6. As shown, the pitch of the beams 6 is alternately greater and smaller, and the length of the hoisting girders 7 is accordingly alternately longer and shorter. Of course, the pitch of the beams 6 can also be constant, and accordingly the size of the hoisting girders 7. As also shown, the beams 6 are in each case common to three hoisting girders 7, one always Deing provided for each dock. As will be clear, the hoisting girders 7 for those common beams 6 operate in areas essentially screened off from each other (the individual docks). However, the operating ranges of the hoisting girders 7 extend until they are above the corresponding quays 3, where those operating ranges of the hoisting girders overlap. Platforms can be provided above said quays 3, for example the platforms 13, or a series of racks 14 disposed one above the other and fixed to the column 5, as shown in Fig. 4. Goods can be deposited temporarily thereon by one hoisting girder 7, and picked up again by the next hoisting girder operating in the adjacent dock 1. A conveyor 32 also extends along each quay 3. For transport backwards and forwards, this conveyor consists, for example, of a top and a bottom section (not visible). On the top section goods are, for example, conveyed to the stores 30 and 31, while on the bottom section they are conveyed in the opposite direction. The conveyor 32 can consist, for example, of endless belts or roller tracks, or rails along which bogies can be moved.

The temporary store 30 and the permanent store 31 follow one another, viewed in the lengthwise direction of the docks 3. Both stores can be designed as shown in Fig. 4, i.e. with series of racks 14 placed above one another, but other types of store are also conceivable, for example in which the goods are stored only at one level, or placed resting directly above each other. It is, however, preferable to place them in the racks 14, on account of the compactness of the store, and the ready accessibility of all individual goods. The temporary store 30 is divided into three sectors 30a, 30b, 30c, which are disposed next to each other along the lengthwise direction of the quays 3. Each sector is disposed in line with a dock 3. A space is left between the various sectors, in which space the extensions of the conveyors 32 run. This extension of the conveyors 32 ends at the permanent magnet 31. A transverse path 34 is also kept free in each case between the temporary store 30 and the docks 1 or the permanent store 31. By means of these transverse paths 34 the goods (not visible) moving essentially in the lengthwise direction of the quays 3 can also be moved in the transverse direction. This means that these goods can be conveyed efficiently between the various docks 1, the sectors 30a, 30b 30c and the permanent store 31.

With the arrangement shown in Fig. 5, goods can be moved efficiently and quickly and stored in both the vessels 2 and the stores 30, 31. The hoisting girders 7 of relatively low weight, moving along the fixed beams 6, ensure that goods can be moved quickly into and out of the vessels 2. Supply to and discharge from the quays 3 is effected quickly along the straight conveyors. Directly behind the docks are the stores 30, 31, which are centrally situated relative to the various docks 1 located adjacent to each other. For rapid conveyance of goods between the permanent store 31 and the vessels 2, the store 30 is divided into sectors, with spaces between them.

Of course, a railway line can be provided parallel to the quays 3, for example overlapping the quays 3 and the stores 30, 31. For example, said railway line can be disposed next to one of the outermost quays 3, and goods can be moved directly between goods trains on said railway line and the vessels 2. For example, the beams 6 can be extended in this case to run above said railway line. The railway line can also be placed so that it runs parallel to the transverse path 34 at the side of the store 31 facing away from the docks. Such a railway line can, of course, also be accommodated in one or more of the transverse paths. Instead of or in addition to a railway line for goods trains, corresponding paths can be provided for lorries or other mobile means of conveyance.

Although the embodiment according to Fig. 5 is described mainly in connection with the guide of the hoisting girders according to Fig. 2, a design according to Fig. 3 can also be used. However, in the case of that variant of an embodiment there will be no question of hoisting girders 7 movable along common beams 6. In order to ensure that in that case the hoisting girders 7 have operating ranges overlapping each other above the quays 3, said hoisting girders can project on either side of the beams 10, in such a way that the crab 9 can pass said beams 10 unimpeded. In connection with a guide and support of the hoisting girders 7 according to Fig. 2, it goes without saying that in the case of beams 6 running over a plurality of docks, the connection between the columns 5 and said beams 6 or the beams 10 should be adapted in such a way that the hoisting girders 7 can pass the beams 10 freely with a load suspended therefrom. Further stores can also be set up, for example next to the stores 30, 31 or the docks 1, or even between them, viewed in the lengthwise direction of the quays 3.

Of course, various modifications of the embodiments described and shown here are also conceivable. For example, the beams 6 could be divided halfway along the span and hingedly fixed to the columns 5. When a vessel sails into and out of the device 4, said beams can then be swung up, which means that when the height of the beams 6 above the surface 17 is low, sufficient height for the vessel to sail through is still provided. What is important is that guide rails should be disposed immovably along the quay and over the vessel, along virtually the entire length thereof, along which rails one or more hoisting means in each case can travel above the quay and the vessel, with the result that goods can be loaded and/or unloaded simultaneously over the entire length of the vessel, without the necessity for warping the vessel or moving the construction which supports the rails.

## Claims

1. Method of loading and unloading a ship with containers, the method comprising the steps of:
- providing a portal crane structure (4) over a dock (1), the portal crane structure (4) comprising a series of spaced, adjacent portal elements (5, 6) which are stationary positioned along the longitudinal direction of the ship (2), said portal elements providing a series of essentially horizontal adjacent overhead tracks (6) bridging the ship, a loading and unloading area, and a load manoeuvring platform at the side of said loading and unloading area, each overhead track carrying at least one individual carriage (8) from a series of carriages extending parallel with respect to the longitudinal axis of the ship, each carriage (8) being movable perpendicular with respect to the longitudinal axis of the ship, and carrying at least one vertically displaceable hoisting element (9), characterised by the steps of:
- positioning the vertical columns (5) of the portal elements along two opposite quays (3) which extend on both sides of the dock in the longitudinal direction the ship,
- and simultaneously moving the carriages (8), along the overhead tracks (6) between the manoeuvring platform on one of the quays to the loading/unloading position on the ship, thus performing a multitude of simultaneous loading or/and unloading operations.

2. A portal crane structure (4) having a series of spaced, adjacent portal elements (5,6) which are positioned along the longitudinal direction of a dock (1), said portal elements comprising a series of essentially horizontal adjacent overhead tracks (6) bridging the ship in the dock, each overhead track carrying at least one individual carriage (8) from a series of carriages extending parallel with respect to the longitudinal direction of the ship; each carriage being movable perpendicular with respect to said longitudinal direction, and having at least one vertically displaceable hoisting element, wherein the overhead tracks bridge a loading and unloading area, and a load-manoeuvring platform at the side of said loading and unloading area, said portal elements further having fixedly mounted vertical column elements (5) on both sides of the said loading and unloading area,
characterized in that said vertical column elements are fixedly positioned along oppositely located quays (3) on both sides of the dock (1) extending in the longitudinal direction of the ship,
said loading and unloading area is located between the quays (3); and
said load manoeuvring platform is provided at one of said quays (3),
said loading and unloading area and said load manoeuvring platform being bridged by said carriage.

3. A portal crane structure according to claim 2, characterized in that each said overhead track comprises two spaced parallel guide elements (6) which are in a fixed position running between two respective column elements (5), a girder (7) bridging said guide elements (6) of an overhead track, said girder (7) being movable parallel, with respect to the said guide elements (6), said carriage (9) being supported by said girder (7) and being movable in the longitudinal direction of the said girder (7), said girders (7) being alternately above and below said guide elements (6), viewed in the direction parallel with respect to said longitudinal axis of the ship, said girders (7) beneath said guide elements (6) extending beyond its respective overhead track, viewed in the lengthwise direction of said girder (7), such that a carriage (9) which is supported by a girder (7) beneath the guide elements (6) can be moved into a position vertically below the girder (7) of an adjacent overhead track.

4. A portal crane structure according to claim 2, wherein said overhead tracks are movable parallel with respect to the said longitudinal axis of the ship with respect to the said portal elements.

5. A portal crane structure according to any of the preceding claims 2-4, wherein each quay (3) is further provided with a container store (11).

6. A portal crane structure according to claim 5, wherein at a level above said load manoeuvring platform, an essentially horizontal container deposit surface (13) is provided above each quay (3).

## Patentansprüche

1. Verfahren zum Be- und Entladen eines Schiffes mit Containern, wobei das Verfahren die folgenden Schritte umfaßt:
- Bereitstellen einer Portalkrankonstruktion (4) über einem Pier (1), wobei die Portalkrankonstruktion (4) eine Reihe von voneinander beabstandeten, benachbarten Portalelementen (5, 6) umfaßt, die ortsfest entlang der Längsrichtung des Schiffes (2) Positioniert sind, wobei die Portalelemente eine Reihe von im wesentlichen horizontalen, benachbarten, das Schiff überbrückenden Überkopfschienen (6), einen Lade- und Entladebereich und eine Lasthandhabungsplattform an der Seite des Lade- und Entladebereichs umfassen, wobei jede Überkopfschiene mindestens einen individuellen Schlitten (8) aus einer Reihe von Schlitten, die sich parallel zur Längsachse des Schiffes erstrecken, trägt, wobei jeder Schlitten (8) senkrecht zur Längsachse des Schiffes beweglich ist und mindestens ein vertikal verschiebbares Hebezeugelement (9) trägt,
gekennzeichnet durch die folgenden Schritte:
- Positionieren der vertikalen Säulen (5) der Portalelemente entlang zweier einander gegenüberliegender Kais (3), die sich auf beiden Seiten des Piers in Längsrichtung des Schiffes erstrecken
- und gleichzeitiges Bewegen der Schlitten (8) entlang der Überkopfschienen (6) zwischen der Handhabungsplattform auf einem der Kais zu der Lade-/Entladeposition auf dem Schiff, wodurch eine Vielzahl gleichzeitiger Lade- und/oder Entladevorgänge ausgeführt wird.

2. Portalkrankonstruktion (4) mit einer Reihe von voneinander beabstandeten, benachbarten Portalelementen (5, 6), die entlang der Längsrichtung eines Piers (1) positioniert sind, wobei die Portalelemente folgendes umfassen: eine Reihe von im wesentlichen horizontalen, benachbarten, das Schiff im Pier überbrückenden Überkopfschienen (6), wobei jede Überkopfschiene mindestens einen individuellen Schlitten (8) aus einer Reihe von Schlitten, die sich parallel zur Längsrichtung des Schiffes erstrecken, trägt; wobei jeder Schlitten senkrecht zu der Längsrichtung beweglich ist und mindestens ein vertikal verschiebbares Hebezeugelement aufweist, wobei die Überkopfschienen einen Lade- und Entladebereich überbrücken, und eine Lasthandhabungsplattform an der Seite des Lade-und Entladebereichs, wobei die Portalelemente weiterhin fest montierte, vertikale Säulenelemente (5) auf beiden Seiten des Lade- und Entladebereichs aufweisen, dadurch gekennzeichnet, daß die vertikalen Säulenelemente auf beiden Seiten des sich in Längsrichtung des Schiffs erstreckenden Piers (1) entlang einander gegenüberliegender Kais (3) fest positioniert sind,
daß sich der Lade- und Entladebereich zwischen den Kais (3) befindet
und
daß die Lasthandhabungsplattform an einem der Kais (3) vorgesehen ist.

3. Portalkrankonstruktion nach Anspruch 2, dadurch gekennzeichnet, daß jede Überkopfschiene folgendes umfaßt: zwei voneinander beabstandete parallele Führungselemente (6), die sich in einer zwischen zwei jeweiligen Säulenelementen (5) verlaufenden festen Position befinden, einen die Führungselemente (6) einer Überkopfschiene überbrückenden Träger (7), der parallel zu den Führungselementen (6) beweglich ist, wobei der Schlitten (8) von dem Träger (7) gestützt wird und in Längsrichtung des Trägers (7) beweglich ist, wobei die Träger (7) - in parallel zur Längsachse des Schiffes verlaufender Richtung gesehen - abwechselnd über und unter den Führungselementen (6) verlaufen, wobei sich die Träger (7) unter den Führungselementen (6) - in Längsrichtung des Trägers (7) gesehen - über ihre jeweilige Überkopfschiene hinaus erstrecken, so daß ein Schlitten (8), der von einem Träger (7) unter den Führungselementen (6) gestützt wird, in eine vertikal unter dem Träger (7) einer benachbarten Überkoptschiene liegende Position bewegt werden kann.

4. Portalkrankonstruktion nach Anspruch 2, bei der die Überkopfschienen bezüglich der Portalelemente parallel zur Längsachse des Schiffes beweglich sind.

5. Portalkrankonstruktion nach einem der vorhergehenden Ansprüche 2 - 4, bei der jeder Kai (3) weiterhin mit einem Containerlager (11) versehen ist.

6. Portalkrankonstruktion nach Anspruch 5, bei der auf einem über der Lasthandhabungsplattform liegenden Niveau eine im wesentlichen horizontale Containerabstellfläche (13) über jedem Kai (3) vorgesehen ist.

## Revendications

1. Procédé de chargement et de déchargement d'un navire avec des conteneurs, le procédé comprenant les étapes consistant à:
- procurer une structure de grue à plein portique (4) par-dessus un dock (1), la structure de grue à plein portique (4) comprenant une série d'éléments de portiques adjacents espacés (5, 6) qui sont positionnés de manière stationnaire dans la direction longitudinale du navire (2), lesdits éléments de portiques procurant une série de voies suspendues adjacentes (6) essentiellement horizontales surplombant le navire, une zone de chargement et de déchargement, et une plate-forme de manoeuvre des charges à côté de ladite zone de chargement et de déchargement, ladite voie suspendue portant au moins un chariot individuel (8) faisant partie d'une série de chariots s'étendant parallèlement à l'axe longitudinal du navire, chaque chariot (8) étant mobile perpendiculairement à l'axe longitudinal du navire et portant au moins un élément de relevage (9) apte à se déplacer verticalement, caractérisé par les étapes consistant à:
- positionner les colonnes verticales (5) des éléments de portiques le long de deux quais opposés (3) qui s'étendent de part et d'autre du dock dans la direction longitudinale du navire, et
- déplacer simultanément les chariots (8) le long des voies suspendues (6) entre la plate-forme de manoeuvre sur un des quais à la position de chargement/déchargement sur le navire, en réalisant ainsi une multitude d'opérations simultanées de chargement et/ou de déchargement.

2. Structure de grue à plein portique (4) possédant une série d'éléments de portiques adjacents espacés (5, 6) qui sont positionnés le long de la direction longitudinale d'un dock (1), lesdits éléments de portiques comprenant une série de voies suspendues adjacentes (6) essentiellement horizontales surplombant le navire dans le dock, chaque voie suspendue portant au moins un chariot individuel (8) faisant partie d'une série de chariots s'étendant parallèlement à la direction longitudinale du navire, chaque chariot étant mobile perpendiculairement à ladite direction longitudinale et possédant au moins un élément de relevage apte à se déplacer verticalement, dans laquelle les voies suspendues surplombent une zone de chargement et de déchargement, ainsi qu'une plate-forme de manoeuvre des charges à côté de ladite zone de chargement et de déchargement, lesdits éléments de portiques possédant en outre des éléments de colonnes verticaux (5) montés à demeure de part et d'autre de ladite zone de chargement et de déchargement, caractérisée en ce que lesdits éléments de colonnes verticaux sont positionnés à demeure le long de quais opposés (3) de part et d'autre du dock (1) s'étendant dans la direction longitudinale du navire;
ladite zone de chargement et de déchargement est située entre les quais (3); et
ladite plate-forme de manoeuvre de la charge est prévue à au moins un desdits quais (3).

3. Structure de grue à plein portique selon la revendication 2, caractérisée en ce que chacune desdites voies suspendues comprend deux éléments de guidage parallèles espacés (6) qui s'étendent en position fixe entre deux éléments de colonnes respectifs (5), une poutrelle (7) chevauchant lesdits éléments de guidage (6) d'une voie suspendue, ladite poutrelle (7) étant mobile parallèlement auxdits éléments de guidage (6), ledit chariot (8) étant supporté par ladite poutrelle (7) et étant mobile dans la direction longitudinale de ladite poutrelle (7), lesdites poutrelles (7) étant disposés en alternance au-dessus et en dessous desdits éléments de guidage (6), lorsqu'on regarde dans la direction parallèle audit axe longitudinal du navire, lesdites poutrelles (7) en dessous desdits éléments de guidage (6) s'étendant au-delà de leur voie suspendue respective lorsqu'on regarde dans la direction longitudinale de ladite poutrelle (7), de telle sorte qu'un chariot (8) qui est supporté par une poutrelle (7) en dessous des éléments de guidage (6) peut se déplacer pour prendre une position verticalement en dessous de la poutrelle (7) d'une voie suspendue adjacente.

4. Structure de grue à plein portique selon la revendication 2, dans laquelle lesdites voies suspendues sont aptes à se déplacer parallèlement audit axe longitudinal du navire par rapport auxdits éléments de portiques.

5. Structure de grue à plein portique selon l'une quelconque des revendications précédentes 2 à 4, dans laquelle chaque quai (3) est en outre muni d'une zone d'entreposage (11) pour des conteneurs.

6. Structure de grue à plein portique selon la revendication 5, dans laquelle, à un niveau situé au-dessus de ladite plate-forme de manoeuvre des charges, on prévoit une surface essentiellement horizontale (13) pour déposer des conteneurs, au-dessus de chaque quai (3).
